# EUROPÄISCHE PATENTSCHRIFT

(11) **EP 2 483 643 B1**
(45) Veröffentlichungstag und Bekanntmachung des Hinweises auf die Patenterteilung: **14.08.2013**
(21) Anmeldenummer: 10763343.0
(22) Anmeldetag: 28.09.2010
(51) Int. Cl.: G01F 1/688, G01P 5/10, G01K 11/32

(54) **ABGASERZEUGENDE EINRICHTUNG, INSBESONDERE SCHIFF, MIT EINER ABGASVOLUMENBESTIMMUNG**
EXHAUST GAS PRODUCING INSTALLATION, IN PARTICULAR A SHIP, WITH EXHAUST GAS VOLUME DETERMINATION
INSTALLATION PRODUISANT DES GAS D'ÉCHAPPEMENT, UN BATEAU EN PARTICULIER, AVEC DÉTERMINATION DU VOLUME DE GAZ D'ÉCHAPPEMENT

(30) Priorität: 29.09.2009 DE 102009043345
(43) Veröffentlichungstag der Anmeldung: 08.08.2012
(73) Patentinhaber: Siemens Aktiengesellschaft, 80333 München (DE)
(72) Erfinder: BOSSELMANN, Thomas, 91080 Marloffstein (DE); HARTIG, Rainer, 21614 Buxtehude (DE)
(86) Internationale Anmeldenummer: PCT/EP2010/064300
(87) Internationale Veröffentlichungsnummer: WO 2011/039153

(56) Entgegenhaltungen:
- EP-A1- 1 510 656
- WO-A2-2004/042326
- DE-A1- 19 821 956
- LATKA I ET AL: "Monitoring of inhomogeneous flow distributions using fibre-optic Bragg grating temperature sensor arrays", PROCEEDINGS OF SPIE - THE INTERNATIONAL SOCIETY FOR OPTICAL ENGINEERING - OPTICAL SENSING II, 3. April 2006 (2006-04-03), XP040223478, ISSN: 0277-786X, DOI: 10.1117/12.668899

## Beschreibung

Die Erfindung betrifft eine abgaserzeugende Einrichtung, insbesondere ein Schiff, mit einem Abgaskanal, vom dem Abgas der Einrichtung in eine Umgebung der Einrichtung austritt, und mit einer Vorrichtung zur Bestimmung eines durch den Abgaskanal an die Umgebung abgegebenen Abgasvolumens gemäß Patentanspruch 1.

Große stationäre und mobile Einrichtungen, wie z.B. fossile Kraftwerke, Industrieanlagen oder auch Schiffe, tragen wesentlich mit dazu bei, durch Schadstoffausstoß (z.B. CO2) das Klima zu verändern und die Umwelt zu belasten. Es ist daher zu erwarten, dass in naher Zukunft das Abgasvolumen derartiger Einrichtungen ermittelt wird, um daraus über Emissionszertifikate eine Kontrolle der Emissionen zu erreichen.

Hierzu ist es bereits bekannt, das Abgasvolumen indirekt anhand von Betriebsparametern der Anlage, wie z.B. von einem Brennstoffverbrauch, einer Brennstoffzusammensetzung, einer Verbrennungstemperatur, etc. zu ermitteln. Dabei werden üblicherweise von dem Hersteller oder Betreiber eines Abgaserzeugers (z.B. einer Verbrennungskraftmaschine oder einer Dampfturbinenanlage) der Einrichtung bereitgestellte Daten und Zusammenhänge zwischen den Betriebsparametern und dem Abgasvolumen zugrunde gelegt. Es besteht dabei jedoch keine Möglichkeit, auf neutralem, unabhängigem Wege die dadurch ermittelten Abgasvolumen zu verifizieren.

WO 2004/042326 A2 offenbart ein Messelement zur Bestimmung einer Strömungsgeschwindigkeit eines das Messelement umströmenden Fluids mit einem Leiter zum Führen einer elektromagnetischen Welle entlang seiner Längserstreckung und wenigstens einem zum Leiter benachbart angeordneten, elektrischen Heizelement, mittels welchem der Leiter mit Wärme beaufschlagbar ist. Dabei wird eine in den Leiter eingekoppelte elektromagnetische Welle entsprechend der von der Strömungsgeschwindigkeit des Fluids abhängigen Temperatur des Leiters beeinflusst.

Latka, I. et al: "Monitoring of inhomogeneous flow distributions using fibre-optic Bragg grating temperature sensor arrays", PROCEEDINGS OF SPIE - THE INTERNATIONAL SOCIETY FOR OPTICAL ENGINEERING - OPTICAL SENSING II, offenbart eine Messvorrichtung mit Faser-Bragg-Gitter-Sensoren zur Bestimmung einer inhomogenen Strömungsgeschwindigkeitsverteilung in einem strömenden Gas.

EP 1510656 A1 offenbart ein Verfahren und eine Vorrichtung zum Erkennen eines Betriebszustandes beim Betrieb einer Turbine, bei dem ein heißes Abgas durch ein Abgasgehäuse strömt und die Temperatur des Abgases im Abgasgehäuse zeitaufgelöst erfasst wird. Dabei werden mehrere Temperaturmesswerte des Abgases ortsaufgelöst erfasst.

DE 19821956 A1 offenbart ein Verfahren zur quantitativen Analyse von Gasvolumina mittels Emissions- oder Absorptionsspektrometrie im ultravioletten, sichtbaren und infraroten Spektralbereich. Dabei werden geometrisch definierte und reproduzierbar verstellbare Beobachtungsebenen festgelegt, die jeweils senkrecht zur Längsachse eines Abgasstrahls ausgerichtet sind, und Messreihen mit spektralen Messungen durchgeführt, wobei die optische Achse eines Spektrometers immer in einer Beobachtungsebene liegt.

Ausgehend hiervon ist es Aufgabe vorliegender Erfindung, eine verbesserte abgaserzeugende Einrichtung anzugeben, bei der das Abgasvolumen mit hoher Genauigkeit ermittelbar ist, wobei die hierzu notwendige Vorrichtung auch bei schon bestehenden Einrichtungen mit geringem Aufwand nachrüstbar sein und sich durch eine hohe Wartungsfreundlichkeit auszeichnen soll.

Die Lösung dieser Aufgabe gelingt durch eine Einrichtung gemäß Patentanspruch 1. Vorteilhafte Ausgestaltungen sind jeweils Gegenstand der Unteransprüche 2 bis 16.

Eine erfindungsgemäße abgaserzeugende Einrichtung weist zur Bestimmung des Abgasvolumens eine Vorrichtung auf, die mehrere quer zur Strömungsrichtung eines Abgases am Ende des Abgaskanals an vorbestimmten Positionen verteilt angeordnete Bragg-Gitter umfasst, die in einer Lichtwellenleiterstruktur ausgebildet sind, die aus zumindest einem Lichtwellenleiter besteht, wobei benachbart zu diesen Bragg-Gittern entweder eine Heizeinrichtung angeordnet ist, mit der die Bragg-Gitter mit Wärme beaufschlagbar sind, oder eine Kühleinrichtung angeordnet ist, durch die die Bragg-Gitter mit Kälte beaufschlagbar sind.

Wenn Licht in die Lichtwellenleiterstruktur eingekoppelt wird, wird dieses an den darin angeordneten Bragg-Gittern entgegen seiner ursprünglichen Ausbreitungsrichtung zurückgestreut. Das Spektrum des zurückgestreuten Lichts ist dabei abhängig von der Gitterkonstante des Gitters. Die Gitterkonstante ist wiederum abhängig von der Temperatur des Gitters. Werden nun die Bragg-Gitter durch die Heizeinrichtung erwärmt bzw. durch die Kühleinrichtung gekühlt, so wird ein Teil der Wärmeleistung bzw. der Kühlleistung durch ein an den Gittern vorbeiströmendes Abgas abgeführt. Der abgeführte Teil ist dabei umso größer, je größer die Strömungsgeschwindigkeit des Abgases ist. Durch das in dem Abgaskanal an den Bragg-Gittern vorbeiströmende Abgas wird somit die Temperatur der Bragg-Gitter beeinflusst, und zwar umso mehr, je größer die Strömungsgeschwindigkeit des Abgases ist. In Abhängigkeit von der Temperatur des Bragg-Gitters ändert sich jedoch auch die Gitterkonstante des Gitters. Das Spektrum des zurückgestreuten Lichts ist somit abhängig von der Strömungsgeschwindigkeit des Abgases an dem Bragg-Gitter. Aus der Strömungsgeschwindigkeit des Abgases und der von dem Abgas durchströmten Fläche kann wiederum das Volumen das an den Gittern vorbeiströmenden Abgases abgeleitet werden.

Dabei ist jedoch zu beachten, dass in großen industriellen und mobilen Anlagen die Abgaskanäle eine sehr große Querschnittsfläche von bis zu mehreren Quadratmetern aufweisen können. Damit kann man nicht mehr voraussetzen, dass eine über den gesamten Querschnitt homogene Strömung des Abgases vorliegt. Eine punktuelle Messung wäre daher nicht hinreichend. Deshalb werden mehrere Bragg-Gitter an vorbestimmten Positionen quer zur Strömungsrichtung des Abgases, d.h. in einer Querschnittsfläche des Abgaskanals, verteilt angeordnet. Hierdurch ist eine verteilte Strömungsmessung des Abgases über die gesamte Querschnittsfläche des Abgaskanals möglich, wodurch eine hohe Genauigkeit bei der Bestimmung des Abgasvolumens auch bei inhomogenen Abgasströmungen erzielt werden kann. Da Lichtwellenleiter einen sehr geringen Durchmesser und folglich einen geringen Strömungswiderstand aufweisen, stellt die Lichtleiterstruktur für eine derartige verteilte Strömungsmessung einen vernachlässigbaren Strömungswiderstand für den Abgasstrom dar, so dass der Betrieb der Anlage durch die Abgasvolumenbestimmung nicht beeinflusst wird. Es kann somit auf direktem Wege, unabhängig von Hersteller- oder Betreiberinformationen und mit hoher Genauigkeit das Abgasvolumen bestimmt werden.

Der zumindest eine Lichtwellenleiter ist dabei vorzugsweise durch eine Glasfaser gebildet, da sich diese durch hohe Beständigkeit gegenüber physikalischen und/oder chemischen Beanspruchungen auszeichnet und insbesondere eine hohe Temperaturbeständigkeit aufweist. Je nach Anwendungsfall kann der Lichtwellenleiter jedoch auch durch eine Kunststofffaser gebildet sein.

Da die Lichtwellenleiterstruktur und die Heizeinrichtung bzw. Kühleinrichtung am Ende des Abgaskanals angeordnet sind, kann eine Nachrüstung mit geringem Aufwand auch bei schon bestehenden Einrichtungen erfolgen, da hierzu keine Eingriffe in den Innenbereich des Abgaskanals notwendig sind. Außerdem ist die Zugänglichkeit für Wartungsmaßnahmen gewährleistet.

Erfindungsgemäß sind dabei die Lichtwellenleiterstruktur und die Heizeinrichtung oder Kühleinrichtung nicht direkt am Austritt des Abgases an die Umgebung, sondern mit einem Abstand davon angeordnet. Hierbei liegt die Erkenntnis zugrunde, dass die Abgase schon im Bereich kurz vor dem Austritt des Abgases an die Umgebung durch die an dem Austritt vorbeiströmende Umgebungsluft verwirbelt und somit von ihrer normalen Strömungsrichtung, die vorzugsweise senkrecht zur Lichtwellenleiterstruktur verläuft, abgelenkt werden. Außerdem können die Abgase hier bereits mit Abgasen aus anderen eng benachbarten Schornsteinen vermischt werden. Beide Effekte würden zu Ungenauigkeiten in der Messung des Abgasvolumens führen. Durch einen Abstand von dem Austritt kann sichergestellt werden, dass das Abgas unbeeinflusst die Lichtwellenleiterstruktur und die Heizeinrichtung oder Kühleinrichtung anströmt und nicht mit anderem Abgas vermischt wird, so dass eine hohe Genauigkeit in der Messung des Abgasvolumens erzielt werden kann.

Vorzugweise gilt dabei für den Abstand: d > D/10, vorzugsweise D > d > D/10, wobei d der Abstand von dem Austritt und D der Durchmesser des Austritts ist. Hierdurch kann ein ausreichender Abstand für eine senkrechte, von anderen Abgasen unbeeinflusste Anströmung der Lichtwellenleiterstruktur durch das Abgas und zugleich eine gute Zugänglichkeit zur der Lichtwellenleiterstruktur am Ende des Abgaskanals erzielt werden.

Der Abstand der Lichtwellenleiterstruktur und der Heizeinrichtung oder Kühleinrichtung von dem Austritt des Abgases kann durch deren Anordnung im Inneren des Abgaskanals gegeben sein.

Alternativ und/oder ergänzend kann der Abstand auch zumindest teilweise durch einen Abgasstutzen gegeben sein, der zusätzlich auf den Abgaskanal aufgesetzt ist.

Von Vorteil ist der Abgasstutzen dabei ein Bestandteil der Vorrichtung zur Bestimmung des Abgasvolumens.

Gemäß einer besonders vorteilhaften Ausgestaltung ist der zumindest eine Lichtwellenleiter in einem Hohlraum eines steifen Trägerkörpers angeordnet, dessen Form den Verlauf des Lichtwellenleiters in dem Abgaskanal festlegt, wobei der Trägerkörper zugleich die Heizeinrichtung oder Kühleinrichtung bildet. Hierdurch ist eine große mechanische Stabilität und Schutz der Lichtwellenleiterstruktur vor aggressiven Abgasen gegeben, wobei sich diese Ausgestaltung auch durch eine besondere konstruktive Einfachheit auszeichnet, da der Trägerkörper auch gleich die Heizeinrichtung oder Kühleinrichtung bildet. Falls der Trägerkörper auch die Heizeinrichtung bildet, besteht er bevorzugt aus einem Metall-Röhrchen, welches durch einen elektrischen Stromfluss beheizt werden kann.

Eine gute Verteilung der Bragg-Gitter für eine genaue Messung des Abgasvolumens bei gleichzeitig guter mechanischer Stabilität und geringem Strömungswiderstand für das Abgas ist auf konstruktiv einfache Weise dadurch möglich, dass die Lichtwellenleiterstruktur mehrere sich kreuzende Lichtwellenleiterabschnitte umfasst, durch die ein Lichtwellenleiternetz ausgebildet ist, wobei das Lichtwellenleiternetz Maschen mit einer Maschenweite aufweist, wobei für die Maschenweite vorzugsweise gilt: D*/3 > W > D*/10, wobei W die Maschenweite und D* der Durchmesser des Abgaskanals bzw. Abgasstutzens im Bereich des Lichtwellenleiternetzes ist. Das Lichtwellenleiternetz kann dabei auch durch einen einzigen Lichtwellenleiter ausgebildet sein. Grundsätzlich kann die Lichtwellenleiterstruktur aber auch anders ausgestaltet sein, z.B. kann sie einen spiralförmig oder kreisförmig verlaufenden Lichtwellenleiter aufweisen, in dem die Bragg-Gitter hintereinander angeordnet sind.

Zur mechanisch stabilen Befestigung der Lichtwellenleiterstruktur und der Heizeinrichtung oder Kühleinrichtung sind diese bevorzugt von einem Rahmen eingefasst.

Der Rahmen kann dann am Ende oder im Inneren des Abgaskanals an dem Abgaskanal befestigt sein. Alternativ kann der Rahmen von einer Halterung im Inneren des Abgaskanals gehalten sein, wobei die Halterung an dem Ende des Abgaskanals befestigt ist.

Der Rahmen kann auch über ein Scharnier mit einem Befestigungselement verbunden sein, das an dem Abgaskanal befestigt ist. Mittels des Scharniers kann dann der Rahmen vom Auslass des Abgaskanals weggekippt werden, so dass der Abgaskanal für Prüfungs- und Reinigungsmaßnahmen zugänglich ist und eine einfache Wartung der Lichtwellenleiterstruktur und der Heizeinrichtung bzw. Kühleinrichtung möglich ist.

Da sich an dem Trägerkörper im Laufe der Zeit Abgaspartikel ablagern können, umfasst die Vorrichtung zur Bestimmung des Abgasvolumens von Vorteil eine Reinigungsvorrichtung zur Reinigung einer äußeren Oberfläche der Lichtwellenleiterstruktur und/oder der Heizeinrichtung bzw. Kühleinrichtung.

Für die Ermittlung von Messwerten zu den Strömungsgeschwindigkeiten an den Bragg-Gittern und die weiteren Auswertungen umfasst die Vorrichtung zur Bestimmung des Abgasvolumens bevorzugt zumindest eine Lichtquelle zur Einstrahlung von Licht in die Lichtwellenleiterstruktur und zumindest eine Signalverarbeitungseinrichtung, welche aus von Bragg-Gittern in der Lichtwellenleiterstruktur entgegen seiner ursprünglichen Ausbreitungsrichtung zurückgestreutem Licht die Strömungsgeschwindigkeit des Abgases entlang des Verlaufes der Lichtwellenleiterstruktur bestimmt und daraus das vorbeiströmende Abgasvolumen ableitet.

Gemäß einer weiteren vorteilhaften Ausgestaltung ist die Heizeinrichtung bzw. die Kühleinrichtung für eine Messung der

Abgastemperatur deaktivierbar. Aus den ermittelten Strömungsgeschwindigkeiten kann dann aus der Dichte des Abgases auch die Masse des Abgases bestimmt werden. Die Dichte entspricht in erster Näherung der Dichte von Luft, wobei allerdings die Temperaturabhängigkeit der Dichte berücksichtigt werden muss. Die Abgastemperatur bzw. eine Abgastemperaturverteilung kann jedoch sehr einfach ebenfalls anhand des Spektrums von an den Bragg-Gittern der Lichtwellenleiterstruktur zurückgestreuten Lichts bestimmt werden. Dies ist dadurch möglich, dass die Bragg-Gitter für eine vorgegebene Zeit nicht beheizt bzw. gekühlt werden, so dass sie die Temperatur des Abgases aufweisen.

Gemäß einer weiteren vorteilhaften Ausgestaltung umfasst die abgaserzeugende Einrichtung zusätzlich noch zumindest einen Sensor zur Messung einer Konzentration eines Schadstoffes in dem Abgas und eine Auswerteinheit, die derart ausgebildet ist, dass sie anhand zumindest eines Messwerts für eine Konzentration eines Schadstoffes in dem Abgas und eines ermittelten Abgasvolumens eine Schadstoffemission der Anlage bestimmt.

Gemäß einer besonders vorteilhaften Ausgestaltung umfasst die abgaserzeugende Einrichtung einen Abgaserzeuger (z.B. eine Verbrennungskraftmaschine oder eine Dampfturbinenanlage) mit einer Steuer- und/oder Regelungseinrichtung für diesen Abgaserzeuger, wobei die Steuer- und/oder Regelungseinrichtung derart ausgebildet ist, dass sie den Betrieb des Abgaserzeugers in Abhängigkeit von einem ermittelten Abgasvolumen, einer ermittelten Abgastemperatur und/oder einer ermittelten Schadstoffemission steuert bzw. regelt.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: einen Abgaskanal mit einer Vorrichtung zur Bestimmung des Abgasvolumens,
- FIG 2: eine Draufsicht auf eine als ein Netz ausgebildete Sensoreinheit,
- FIG 3: eine Draufsicht auf die Sensoreinheit von FIG 2 mit einem Rahmen,
- FIG 4: einen Schnitt entlang der Linie IV-IV der FIG 3,
- FIG 5: einen Schnitt durch eine mittels eines Halters befestigte Sensoreinheit,
- FIG 6: einen Schornstein mit mehreren Abgasrohren und Sensoreinheiten,
- FIG 7: eine Sensoreinheit mit einem Abgasstutzen,
- FIG 8: eine Befestigung der Sensoreinheit von FIG 7 am Ende eines Abgaskanals,
- FIG 9: eine aus einem Abgaskanal klappbare Sensoreinheit,
- FIG 10: eine Sensoreinheit mit einer Reinigungsvorrichtung,
- FIG 11: einen Schnitt entlang der Linie XI-XI der FIG 10,
- FIG 12: eine abgaserzeugende Einrichtung mit einem Abgaserzeuger und einer Steuer- und/oder Regelungseinrichtung.

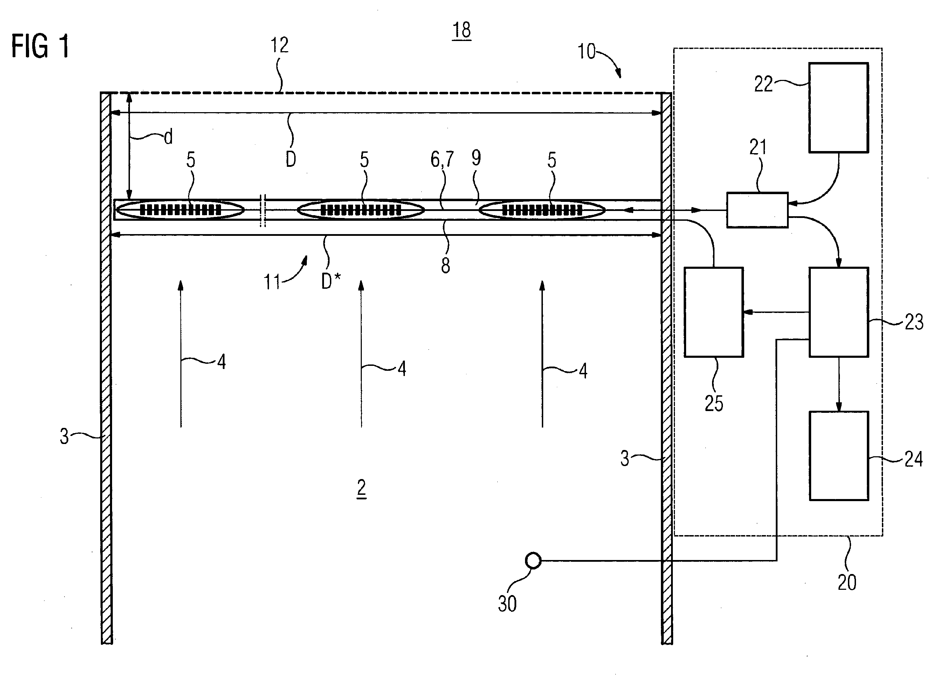

FIG 1 zeigt in einem schematischen Schnitt einen Schornstein 3 einer nicht näher dargestellten abgaserzeugenden Einrichtung. Bei dieser Einrichtung kann es sich beispielsweise um eine große stationäre oder mobile Anlage, wie z.B. ein Kraftwerk, eine industriellen Anlage oder insbesondere um ein Schiff handeln. Der Schornstein 3 bildet einen Abgaskanal 2 aus. Dieser hat beispielsweise einen kreisförmigen Querschnitt. Es sind jedoch auch andere Querschnittsgeometrien des Abgaskanals (z.B. rechteckig, quadratisch, oval) denkbar.

Eine Vorrichtung 10 zur Bestimmung des durch den Abgaskanal 2 bzw. Schornstein 3 an eine Umgebung 18 der abgaserzeugenden Einrichtung abgegebenen Abgasvolumens umfasst eine Sensoreinheit 11, die am Ende des Abgaskanals 2 in dem Abgaskanal 2 angeordnet ist, und eine damit verbundene Mess- und Auswerteeinheit. Die Sensoreinheit 11 umfasst Bragg-Gitter 5, die in dem Abgaskanal 2 senkrecht zur Strömungsrichtung 4 des Abgases an vorbestimmten Positionen verteilt angeordnet in einer Lichtwellenleiterstruktur 6 ausgebildet bzw. eingearbeitet sind. Die Lichtwellenleiterstruktur 6 umfasst zur Vereinfachung der Darstellung hier nur einen geradlinig verlaufenden Lichtwellenleiter 7. In der Praxis umfasst sie jedoch vorzugsweise mehrere Lichtwellenleiter oder aber einen einzigen Lichtwellenleiter mit einem im Wesentlichen nichtlinearen Verlauf. Als Lichtwellenleiter wird vorzugsweise ein flexibles Glasfaserkabel eingesetzt.

Der Lichtwellenleiter 7 ist in einem steifen Trägerkörper in Form eines dünnwandigen Röhrchens 8 aus Metall angeordnet, das senkrecht zur Strömungsrichtung des Abgases in dem Abgaskanal 2 angeordnet ist und dessen Form den Verlauf des Lichtwellenleiters 7 in dem Abgaskanal 2 festlegt. Der Lichtwellenleiter 7 ist dabei austauschbar in einem Hohlraum 9 des Röhrchens 8 angeordnet und durch das Röhrchen 8 vor unmittelbarem Kontakt mit dem Abgas geschützt.

Wenn das Röhrchen 8 von einem Strom durchflossen wird, wärmt es sich auf und dient dabei als Heizeinrichtung für den Lichtwellenleiter 7. Durch das Röhrchen 8 wird der Lichtwellenleiter 7 gleichmäßig entlang seiner gesamten Länge auf eine Temperatur erwärmt, die beispielweise 50 - 100°C oberhalb der Temperatur des Abgases im Bereich der Sensoreinheit 11 liegt. Als Stahlröhrchen kommen beispielsweise Röhrchen aus einer hochtemperaturfesten Nickelbasislegierung (wie z.B. einer Inconel-Legierung) mit einem Außendurchmesser von 1.5 mm und einem Innendurchmesser von 0.5 mm zum Einsatz, die eine Temperaturfestigkeiten von 600°C und mehr aufweisen. Alternativ kann auch zur Erwärmung des Lichtwellenleiter 7 ein Hitzdraht in dem Röhrchen 8 angeordnet sein oder ein warmes Fluid durch das Röhrchen 8 strömen.

Die Mess- und Auswerteeinheit 20 umfasst einen optischen Richtkoppler 21, eine Lichtquelle 22, eine Signalverarbeitungseinrichtung 23, eine Anzeigeeinheit 24 und eine Stromquelle 25. Der Lichtwellenleiter 7 ist über den optischen Richtkoppler 21 mit der Lichtquelle 22 und mit der Signalverarbeitungseinrichtung 23 verbunden. Der Richtkoppler 21 koppelt von der Lichtquelle 22 abgestrahltes Licht in den Lichtwellenleiter 7 ein und aus diesem zurückgestreutes Licht zu der Signalverarbeitungseinrichtung 23 aus. Der Signalverarbeitungseinrichtung 23 ist die Anzeigeeinheit 24 nachgeschaltet. Die Stromquelle 25 dient zur Stromversorgung des Röhrchens 8 und kann von der Signalverarbeitungseinrichtung 23 aus aktiviert und deaktiviert werden. Bei Aktivierung der Stromquelle 25 erwärmt das Röhrchen 8 den Lichtwellenleiter 7 mitsamt den Bragg-Gittern 5 gleichmäßig entlang seiner gesamten Länge.

Die Bragg-Gitter 5 sind entlang des Lichtwellenleiters 7 in diesem an vorbestimmten Positionen mit gleichen oder untereinander verschiedenen Gitterperioden ausgebildet. Werden Bragg-Gitter 5 mit unterschiedlichen Gitterperioden eingesetzt, so wird bevorzugt eine breitbandig abstrahlende Lichtquelle 22 eingesetzt. Werden dagegen Bragg-Gitter mit gleichen oder im Wesentlichen gleichen Gitterperioden eingesetzt, so wird vorzugsweise eine gepulste, monochromatische Lichtquelle 22 eingesetzt. Die Bragg-Gitter 5 bestehen aus einer periodischen Folge von scheibenförmigen Bereichen, die einen von dem normalen Brechungsindex eines Kerns des Lichtwellenleiters 7 abweichenden Brechungsindex aufweisen.

Wird in Bragg-Gitter 5 die beispielsweise unterschiedliche Gitterperioden aufweisen, Licht mit einer breitbandigen Verteilung der Intensität über der Wellenlänge eingestrahlt, dann wird ein geringer Teil des Lichtes an den Bragg-Gittern zurückgestreut, und zwar mit einer jeweils charakteristischen spektralen Intensitätsverteilung, die von der Gitterperiode des jeweiligen Gitters abhängt.

Eine lokale Temperaturänderung des Lichtwellenleiters 7 im Bereich eines Bragg-Gitters 5 führt zu einer lokalen Längenexpansion oder -kontraktion und damit zu einer Änderung der Gitterperiode, was eine Verschiebung der spektralen Intensitätsverteilung des zurückgestreuten Lichtes zur Folge hat. Das Ausmaß dieser Verschiebung ist ein Maß für die Längenänderung und damit für die Temperaturänderung.

Zur Abgasvolumenmessung mittels der Lichtwellenleiterstruktur wird zunächst eine Temperaturmessung der Bragg-Gitter 5 vorgenommen. Von der Temperatur der Bragg-Gitter 5 wird dann auf die Strömungsgeschwindigkeit des Abgases in dem Abgaskanal 2 und von dieser auf das Abgasvolumen geschlossen.

Hierzu wird die Stromquelle 25 aktiviert und gibt elektrische Leistung an das Röhrchen 8 ab, was zu einer Erwärmung des Lichtwellenleiters 7 gegenüber seiner Umgebung und insbesondere auch gegenüber den Abgasen führt. Der Lichtwellenleiter 7 wird dabei auf eine Temperatur erwärmt, die - ohne das vorbeiströmende Abgas - über der Temperatur des an dem Lichtwellenleiter 7 vorbeiströmenden Abgases liegen würde. Über das an den Bragg-Gittern 5 vorbeiströmende Abgas wird jedoch ein Teil der von dem Röhrchen 8 ausgehenden Wärmeleistung abgeleitet, so dass sich die Bragg-Gitter 5 weniger erwärmen als ohne vorbeiströmendes Abgas. Es wird dabei umso mehr Wärmeleistung abgeleitet, je größer die Strömungsgeschwindigkeit des vorbeiströmenden kühleren Abgases ist.

Die Signalverarbeitungseinrichtung 23 enthält einen Spektralanalysator zur Ermittlung der spektralen Verteilung des von den einzelnen Bragg-Gittern 5 zurück gestreuten Lichtes und eine Recheneinrichtung, welche das Ausmaß der jeweiligen Verschiebung gegenüber einer Referenzlage ermittelt und in eine Temperaturänderung gegenüber einer Referenztemperatur, bei der die spektrale Verteilung die Referenzlage hat, umrechnet. Dies geschieht für jedes einzelne Bragg-Gitter 5, so dass auf diese Weise die Verteilung der Temperatur entlang des gesamten Lichtwellenleiters 7 an den mit Bragg-Gittern 5 versehenen Stellen erhalten wird.

Anhand dieser Temperaturen kann in der Signalverarbeitungseinrichtung 23 die Strömungsgeschwindigkeit des Abgases entlang des gesamten Lichtwellenleiters 7 an den mit Bragg-Gittern 5 versehenen Stellen bestimmt und daraus das durch den Abgaskanal 2 strömende Abgasvolumen abgeleitet und an der Anzeigeeinheit 24 ausgegeben werden. Die Gesamtquerschnittsfläche des Abgaskanals im Bereich der Lichtwellenleiterstruktur 6 ist dabei in Teilflächen um die verschiedenen Bragg-Gitter 5 herum aufgeteilt. Aus der mit einem Bragg-Gitter 5 einer Teilfläche gemessenen Strömungsgeschwindigkeit und der Fläche der Teilfläche kann das durch die Teilfläche strömende Abgasvolumen ermittelt werden. Die Summer der durch sämtliche Teilflächen strömenden Abgas(teil)volumina ergibt dann das vorbeiströmende Gesamtabgasvolumen. Die Genauigkeit kann dabei noch erhöht werden, wenn die Strömungsgeschwindigkeit zwischen den verschiedenen Messpunkten noch interpoliert wird und somit die Strömungsgeschwindigkeitsverteilung über den Teilflächen berücksichtigt wird. Es erfolgt somit keine punktuelle, sondern eine über die gesamte Strömungsquerschnittsfläche verteilte Strömungsmessung. Diese ermöglicht auch bei Querschnittsflächen des Abgaskanals 2 von mehreren Quadratmetern eine hohe Genauigkeit bei der Abgasvolumenbestimmung, ohne dass es zu einer nennenswerten Veränderung des Strömungswiderstandes in dem Abgaskanal 2 kommt. Bei kleinen Querschnittsflächen des Abgaskanals 2 kann dagegen auch bereits ein einziges Bragg-Gitter zu Abgasvolumenbestimmung ausreichend sein, d.h. es ist dann bereits ein einziger Lichtwellenleiter mit nur einem einzigen Bragg-Gitter zur Abgasvolumenbestimmung ausreichend.

Bei Verwendung von Bragg-Gittern mit gleicher oder im Wesentlichen gleicher Gitterperiode weist die Signalverarbeitungsvorrichtung 23 zusätzlich eine Auswerteelektronik auf, welche die Laufzeit des rückgestreuten Lichts mit veränderter spektraler Intensitätsverteilung erfasst und auswertet. Um eine zeitaufgelöste Messung zu realisieren, kann auf gängige OTDR (Optical Time Domain Reflectometry) - Technik zurückgegriffen werden, wie sie in der Nachrichtentechnik zur Qualitätsbeurteilung von Signalstrecken verwendet wird.

Statt einer Heizeinrichtung in Form des Röhrchens 8 kann auch eine Kälteeinrichtung verwendet werden, durch die der Lichtwellenleiter 7 und die darin eingearbeiteten Bragg-Gitter 5 mit Kälte beaufschlagbar sind. Als Kältemittel kann beispielsweise ein durch das Röhrchen 8 strömendes Fluid zum Einsatz kommen. Die Bragg-Gitter 5 können dann auf eine Temperatur abgekühlt werden, die - ohne das vorbeiströmende Abgas - unterhalb der Temperatur des Abgases liegen würde. Über das an den Bragg-Gittern 5 vorbeiströmende Abgas wird jedoch ein Teil der von der Kälteeinrichtung 19 ausgehenden Kälteleistung abgeleitet. Es wird dabei umso mehr Kälteleistung abgeleitet, je größer die Strömungsgeschwindigkeit des vorbeiströmenden wärmeren Abgases ist. Auch auf diesem Weg kann anhand der an den Bragg-Gittern gemessenen Temperaturen die Strömungsgeschwindigkeiten bestimmt und daraus in der Signalverarbeitungseinrichtung 23 das Abgasvolumen abgeleitet werden.

Besonders vorteilhaft umfasst die Sensoreinheit 11 noch einen Sensor 30 zur Bestimmung der Konzentration eines Schadstoffes, wie z.B. Co2, NOx oder Schwefel in den Abgasen. Der Sensor 30 ist ebenfalls mit der Signalverarbeitungsvorrichtung 23 verbunden. Die Signalverarbeitungsvorrichtung 23 dient als Auswerteeinheit, die anhand eines ermittelten Abgasvolumens und eines Messwerts für die Konzentration des Schadstoffes in dem Abgas eine Schadstoffemission der Anlage bestimmt und auf der Anzeigeeinheit 24 ausgibt. Auf diesem Weg kann mit geringem konstruktivem Aufwand eine Abgasemissionsmessung von stationären und mobilen Anlagen, insbesondere von Schiffen, erfolgen. Die Messung der Konzentration des Schadstoffes in dem Abgas kann entweder punktuell mittels handelsüblicher Messgeräte oder verteilt (z.B. über Laser-Absorptions-Spektroskopie) erfolgen. Der Sensor 30 ist in Strömungsrichtung des Abgases vor der Sensoreinheit 11 angeordnet, so dass Verwirbelungen und Abgasvermischungen im Bereich des Austritts 12 keine Auswirkungen auf die Messergebisse haben.

Vorteilhaft ist es, wenn die von dem Röhrchen 8 abzugebende Wärmeleistung einstellbar ist. Die Wärmeleistung kann in diesem Fall an die Abgastemperatur so angepasst werden, dass sich in dem Lichtwellenleiter 7 von der Signalverarbeitungseinrichtung 23 sicher detektierbare Temperaturunterschiede einstellen, ohne dass ein unnötiges Übermaß an elektrischer Leistung umgesetzt wird. Die Einstellung kann automatisch erfolgen, indem die von der Stromquelle 25 in die Röhrchen eingespeiste Leistung gesteuert durch die Signalverarbeitungseinrichtung 23 ausgehend von einem relativ niedrigen Ausgangswert so lange schrittweise erhöht wird, bis die Signalverarbeitungseinrichtung 23 entlang des Lichtwellenleiters 7 eindeutige Temperaturunterschiede feststellt.

Die Auflösung und somit Genauigkeit der Abgasvolumenmessung wird durch die Anzahl der Bragg-Gitter 5 pro Flächeneinheit des Abgaskanals 2 und die Positionen der Bragg-Gitter 5 entlang des Lichtwellenleiters 7 vorgegeben und ist durch eine geeignete Auslegung an die Erfordernisse des jeweiligen Einsatzfalles anpassbar.

Zusätzlich kann aus den ermittelten Strömungsgeschwindigkeiten auch die Masse des Abgases bestimmt werden. Hierzu muss nur die Dichte des Abgases bestimmt werden. Diese Dichte entspricht in erster Näherung der Dichte von Luft, wobei allerdings die Temperaturabhängigkeit der Dichte berücksichtigt werden muss. Die Abgastemperatur bzw. eine Abgastemperaturverteilung kann sehr einfach ebenfalls anhand des Spektrums des an den Bragg-Gittern 5 der Lichtwellenleiterstruktur 6 zurückgestreuten Lichts bestimmt werden. Dies ist dadurch möglich, dass die Bragg-Gitter 5 für eine vorgegebene Zeit nicht beheizt bzw. gekühlt werden, so dass sie die Temperatur des Abgases aufweisen. Die Signalverarbeitungseinrichtung 23 deaktiviert hierzu für eine vorgegebene Zeit die Stromquelle 25 für das Beheizen des Röhrchens 8.

Die Sensoreinheit 11 ist mit einem Abstand d von einem Austritt 12 des Abgases in die Umgebung 18 der Einrichtung 1 in dem Abgaskanal 2 angeordnet. Für den Abstand d gilt: D > d > D/10, wobei D der maximale Durchmesser des Austritts 12 ist.

Die Mess- und Auswerteeinheit 20 kann im Bereich des Endes des Abgaskanals 2 außerhalb des Abgaskanals 2 angeordnet oder beispielsweise auch am Fuß des Schornsteins 3 oder in einer Automatisierungszentrale der abgaserzeugenden Einrichtung angeordnet und über Kabel mit der Sensoreinheit verbunden sein.

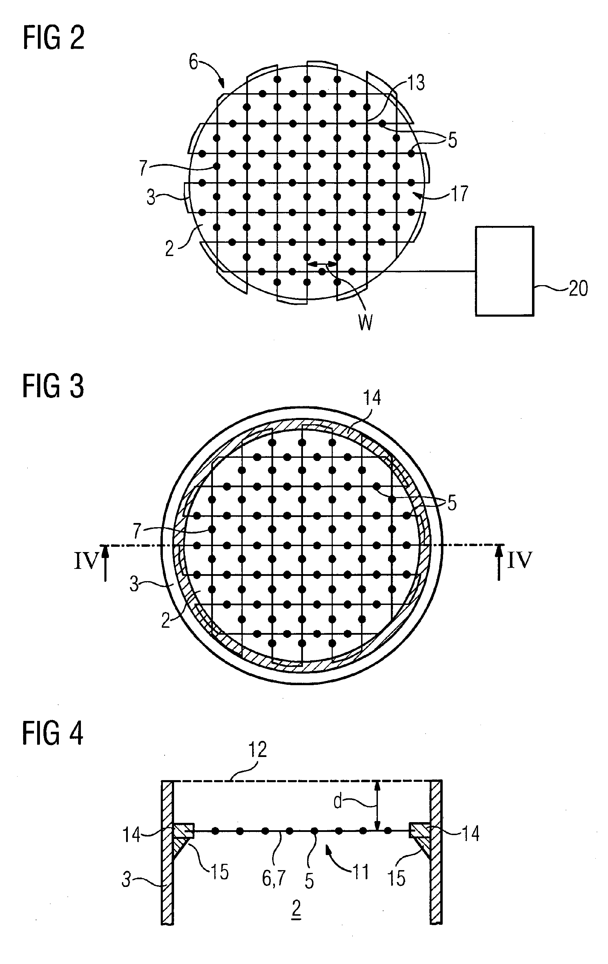

Eine im Abgaskanal 2 verteilte Anordnung der Bragg-Gitter mit guter Auflösung kann durch unterschiedliche Lichtwellenleiter- und Röhrchenstrukturen erzielt werden. Beispiele hierfür sind in den FIG 2 bis 6 dargestellt, wobei zur Vereinfachung der Darstellung von der Sensoreinheit 11 jeweils nur die Lichtwellenleiterstruktur 6 und die Bragg-Gitter 5 dargestellt sind, die zugehörigen Röhrchen jedoch weggelassen sind.

Gemäß FIG 2 kann die Lichtwellenleiterstruktur 6 durch einen einzigen Lichtwellenleiter 7 ausgebildet sein, der abwechselnd von einer Seite des Abgaskanals 2 zu einer gegenüberliegenden Seite verläuft und somit ein Lichtwellenleiternetz 17 ausbildet. Das Lichtwellenleiternetz 17 weist vorzugsweise Maschen 13 jeweils gleicher Größe auf. Zwischen zwei Maschenknoten ist jeweils genau ein Bragg-Gitter 5 angeordnet. Das Lichtwellenleiternetz 17 weist dabei Maschen 13 mit einer Maschenweite W auf, wobei für die Maschenweite W gilt: D*/3 > W > D*/10, wobei D* der Durchmesser des Schornsteins 3 bzw. Abgaskanals 2 im Bereich des Lichtwellenleiternetzes 17 ist. Hierdurch ist eine gute Auflösung bei der Messung bei einem nur geringen Strömungswiderstand durch das Abgas möglich.

Die Lichtwellenleiterstruktur. 6 kann beispielsweise aber auch aus einem einzigen oder mehreren Lichtwellenleitern mit kreisförmigem oder spiralförmigem Verlauf oder aus mehreren sich kreuzenden Lichtwellenleiterabschnitten bestehen.

Zur Erhöhung der Redundanz können statt eines einzigen Röhrchens mit einem einzigen darin enthaltenen Lichtwellenleiter auch zwei benachbart parallel verlaufende Röhrchen mit jeweils einem darin enthaltenen Lichtwellenleiter oder einziges Röhrchen mit zwei parallel darin verlaufenden Lichtwellenleitern vorhanden sein.

Wie in FIG 3 und 4 dargestellt kann die Sensoreinheit 11 von einem Rahmen 14 eingefasst sein, der mittels Befestigungselementen 15 mit einem Abstand d von dem Austritt 12 des Abgases im Inneren des Abgaskanals 2 befestigt ist. Bevorzugt sind die Röhrchen der Sensoreinheit 11 elektrisch von dem Rahmen 14 isoliert in dem Rahmen 14 befestigt. Der Rahmen 14 selbst ist dagegen leitende mit dem Schornstein 3 bzw. Abgaskanal 2 verbunden.

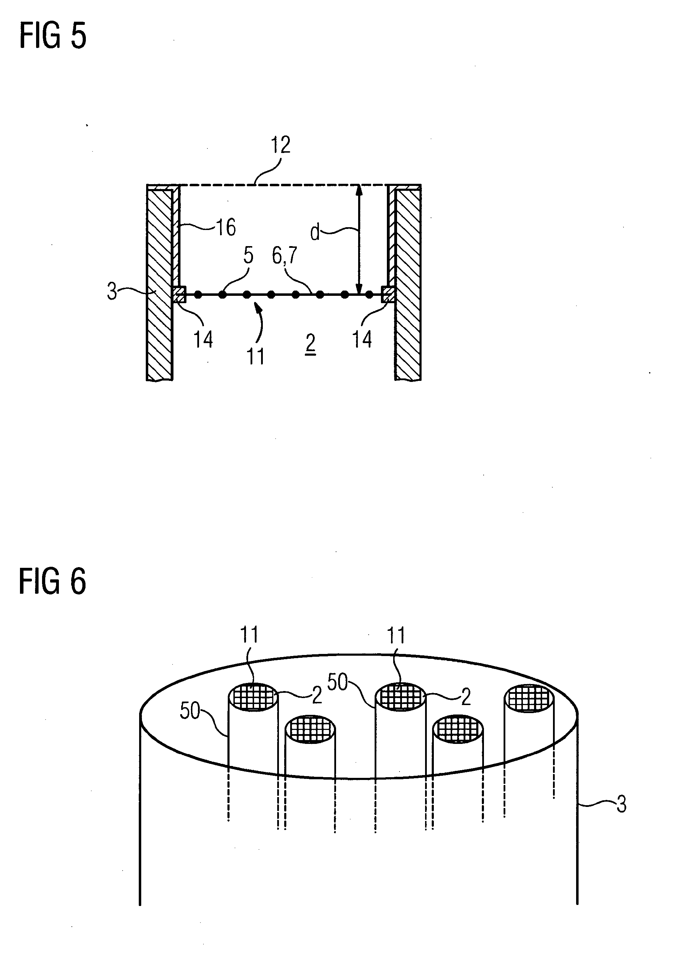

Alternativ kann gemäß FIG 5 der Rahmen 14 im Inneren des Abgaskanals 2 auch von einer Halterung 16 gehalten sein, die an dem Ende des Abgaskanals 2 bzw. Schornsteins 3 befestigt ist.

Falls ein Schornstein 3 - wie in FIG 6 gezeigt - mehrere Abgasrohre 50 mit jeweils einem Abgaskanal 2 aufweist, kann jeweils eine Sensoreinheit 11 für jedes der Abgasrohre 50 vorhanden sein. Jeder Sensoreinheit 11 kann dann jeweils eine eigene Mess- und Auswerteeinheit 20 zugeordnet sein, oder sämtlichen Sensoreinheiten 11 ist eine gemeinsame Mess- und Auswerteeinheit 20 zugeordnet.

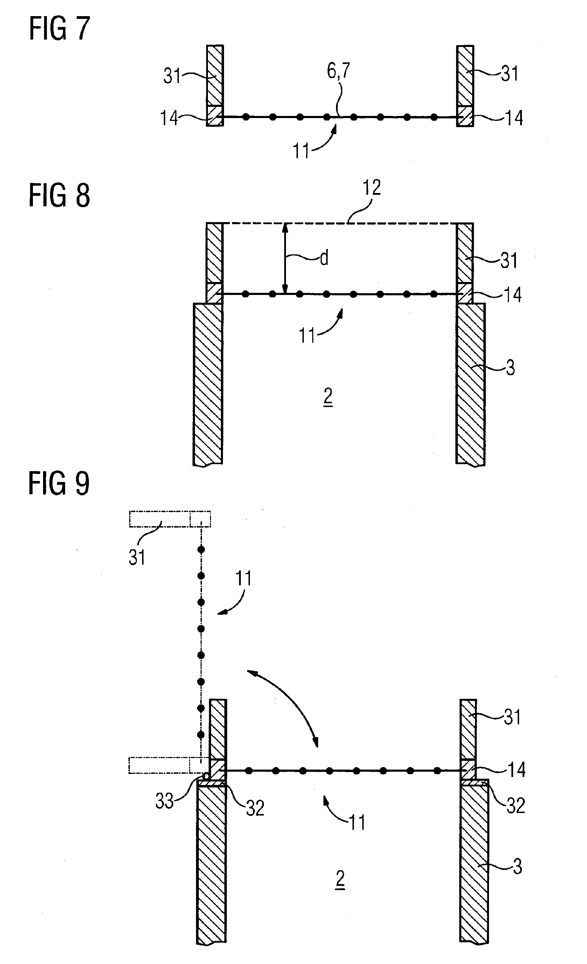

Der Abstand d der Sensoreinheit 11 von dem Austritt 12 des Abgases kann gemäß FIG 7 zumindest teilweise auch dadurch erzielt werden, dass die Sensoreinheit 11 einen Abgasstutzen 31 umfasst, der fest mit dem Rahmen 14 verbunden ist und - wie in FIG 8 gezeigt - gemeinsam mit dem Rahmen 14 auf dem Abgaskanal 2 bzw. Schornstein 3 aufgesetzt ist.

Bevorzugt ist der Rahmen 14 - wie in FIG 9 beispielhaft für die Ausgestaltung der Sensoreinheit 11 gemäß FIG 7 und 8 gezeigt - über ein Befestigungselement 32 an dem Abgaskanal 2 bzw. Schornstein befestigt, wobei der Rahmen 14 über ein Scharnier 33 mit dem Befestigungselement 32 verbunden ist. Mittels des Scharniers 33 kann dann der Rahmen 14 mitsamt Abgasstutzen 31 vom Auslass 12 des Schornsteins 3 von einer waagrechten Lage in eine vertikale Lage gekippt werden, so dass der Schornstein 3 für Prüfungs- und Reinigungsmaßnahmen zugänglich und eine einfache Wartung der Sensoreinheit 11 möglich ist.

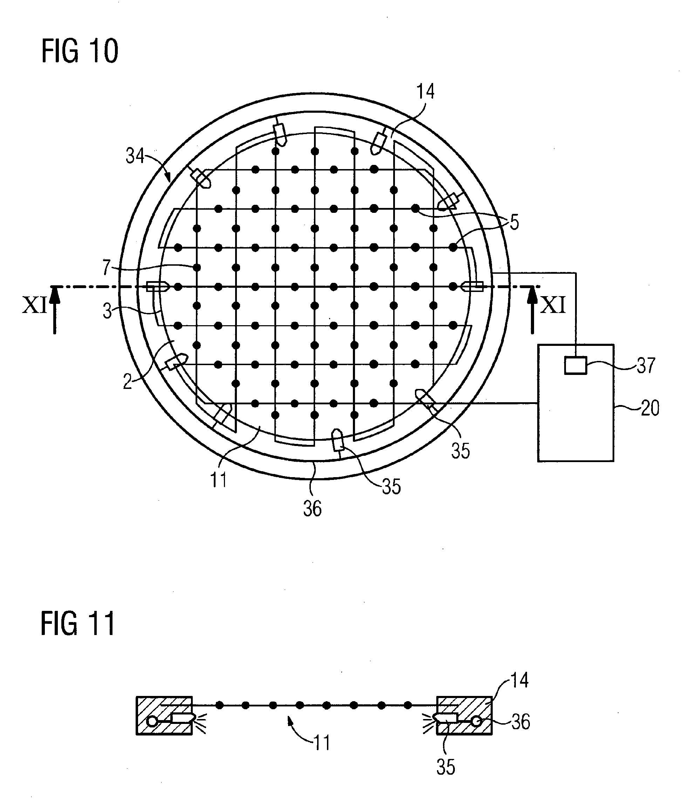

Wie in FIG 10 in einer Draufsicht und in FIG 11 in einem Schnitt entlang der Linie XI-XI von FIG 10 gezeigt, umfasst die Sensoreinheit 11 von Vorteil eine Reinigungsvorrichtung 34 zur Reinigung der äußeren Oberfläche der Röhrchen 8 der Sensoreinheit 11. Die Reinigungsvorrichtung 34 umfasst mehrere in dem Rahmen 14 angeordnete Druckluftdüsen 35, die gleichmäßig über den Umfang des Rahmens 14 verteilt angeordnet und über eine Druckluftleitung 36 mit einer Druckluftquelle 37 verbunden sind, die in der Mess- und Auswerteeinheit 20 angeordnet ist und beispielsweise von der Signalverarbeitungseinrichtung 23 gesteuert wird. Durch einen Druckluftstoß können Abgaspartikel, die sich auf den Röhrchen der Sensoreinheit 11 im Laufe der Zeit, insbesondere im Bereich der Wände des Abgaskanals 2 bzw. Schornsteins 3, ablagern können, entfernt werden. Hierdurch kann eine Erhöhung des Wärmeübergangswiderstandes zwischen dem Abgas und den Bragg-Gittern durch an den Röhrchen abgelagerte Abgaspartikel und eine damit einhergehende Beeinflussung der Messergebnisse vermieden werden. Satt mit Druckluft kann die Oberfläche des Röhrchens 8 auch durch einen Stromstoß in dem Röhrchen 8, der eine kurzzeitige starke Temperaturerhöhung des Röhrchens zur Folge hat, oder mechanisch mit Hilfe von Bürsten gereinigt werden. Eine Verschmutzung oder Ablagerung kann durch die Signalverarbeitungseinrichtung 23 über den Zusammenhang zwischen eingespeister elektrischer Heizleistung und gemessener Temperatur der Bragg-Gitter ohne vorbeiströmendes Abgas abgeleitet werden.

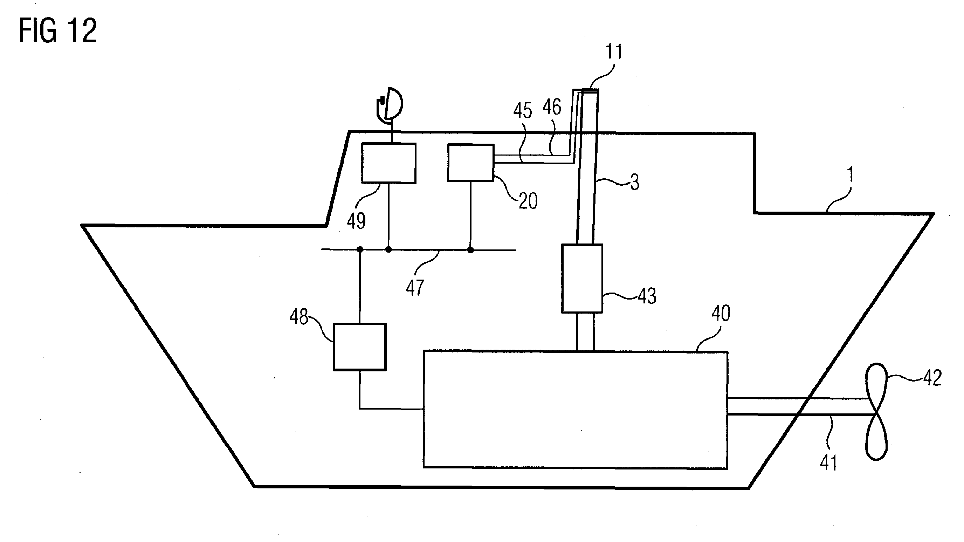

Eine in FIG 12 gezeigte abgaserzeugende Einrichtung 1 in Form eines Schiffes umfasst einen Abgaserzeuger 40 (z.B. eine Verbrennungskraftmaschine oder eine Dampfturbinenanlage), die über eine Propellerwelle 41 einen Propeller 42 antreibt. Die Abgase des Abgaserzeugers 40 werden einer Abgasreinigungsvorrichtung 43 zugeführt und die gereinigten Abgase über einen Schornstein 3 mit einem darin enthaltenen Abgaskanal an die Umgebung abgegeben. Am Ende des Schornsteins 3 ist eine Sensoreinheit 11 einer Vorrichtung zur Abgasvolumenbestimmung angeordnet. Die zugehörige Mess- und Auswerteeinheit 20 befindet sich im Inneren des Schiffes und ist über ein Glasfaserkabel 45 und ein Stromkabel 46 an die Sensoreinheit 11 angeschlossen. Die Mess- und Auswerteeinheit 20 kann beispielsweise in ein übergeordnetes Automatisierungssystem des Schiffes integriert sein.

Eine Steuer- und/oder Regelungseinrichtung 48 für den Abgaserzeuger 40 ist über eine Datenverbindung, hier einen Datennetzwerk 47, mit der Mess- und Auswerteeinheit 20 gekoppelt und empfängt von dieser Messwerte für das Abgasvolumen, die Abgastemperatur und/oder die Schadstoffemission. Die Steuer- und/oder Regelungseinrichtung 48 ist derart ausgebildet ist, dass sie den Betrieb des Abgaserzeugers 40 in Abhängigkeit von dem ermittelten Abgasvolumen, der ermittelten Abgastemperatur und/oder der ermittelten Schadstoffemission steuert bzw. regelt und somit den Betrieb des Abgaserzeuger 40 optimiert. Beispielsweise kann der Abgaserzeuger 40 auf einen Betriebspunkt mit minimalem Abgasvolumen und/oder minimaler Schadstoffemission gesteuert oder geregelt werden. An das Datennetzwerk ist außerdem ein Diagnose- und Zustandsüberwachungssystem 49 angeschlossen, das ebenfalls die Messwerte für das Abgasvolumen, die Abgastemperatur und/oder die Schadstoffemission empfängt. Das Diagnose- und Zustandsüberwachungssystem 49 speichert die Messwerte ab, wertet sie aus und leitet bei Überschreiten von Grenzwerten Gegenmaßnahmen ein. Auch eine Übertragung der Messwerte per Satellitenkommunikation an eine entfernte Überwachungszentrale ist möglich.

## Patentansprüche

1. Abgaserzeugende Einrichtung (1), insbesondere Schiff, mit einem Abgaskanal (2), vom dem Abgas der Einrichtung (1) in eine Umgebung (18) der Einrichtung (1) austritt, und mit einer Vorrichtung (10) zur Bestimmung eines durch den Abgaskanal (2) an die Umgebung (18) abgegebenen Abgasvolumens, wobei die Vorrichtung (10) zur Bestimmung des Abgasvolumens
- mehrere quer zur Strömungsrichtung (4) des Abgases am Ende des Abgaskanals (2) an vorbestimmten Positionen verteilt angeordnete Bragg-Gitter (5) und
- eine Lichtwellenleiterstruktur (6), in der die Bragg-Gittern (5) ausgebildet sind, wobei die Lichtwellenleiterstruktur (6) aus zumindest einem Lichtwellenleiter (7) besteht,
umfasst,
**gekennzeichnet durch**
- eine benachbart zu den Bragg-Gittern (5) angeordnete Heizeinrichtung (8), **durch** die die Bragg-Gitter (5) mit wärme beaufschlagbar sind, wobei eine von der Heizeinrichtung (8) abzugebende Wärmeleistung an die Abgastemperatur anpassbar ist, oder eine benachbart zu den Bragg-Gittern (5) angeordnete Kühleinrichtung, **durch** die die Bragg-Gitter (5) auf eine Temperatur unterhalb einer Abgastemperatur des Abgases abkühlbar sind, wobei
- die Lichtwellenleiterstruktur (6) und die Heizeinrichtung (8) oder die Kühleinrichtung am Ende des Abgaskanals (2) mit einem Abstand (d) von einem Austritt (12) des Abgases in die Umgebung (18) der Einrichtung (1) im Inneren des Abgaskanals (2) angeordnet sind, wobei für den Abstand (d) d > D/10 gilt, wobei d der Abstand (d) von dem Austritt (12) und D der Durchmesser des Austritts (12) ist.

2. Einrichtung (1) nach Anspruch 1,
**dadurch gekennzeichnet, dass** für den Abstand (d) gilt: D > d.

3. Einrichtung (1) nach einem der vorhergehenden Ansprüche,
**dadurch gekennzeichnet, dass** die Bragg-Gitter (5) entlang wenigstens eines Lichtwellenleiters (7) untereinander verschiedene Gitterperioden aufweisen und mittels einer Lichtquelle (22) spektral breitbandiges Licht in diesen Lichtwellenleiter (7) einstrahlbar ist, oder dass die Bragg-Gitter (5) entlang wenigstens eines Lichtwellenleiters (7) gleiche Gitterperioden aufweisen, mittels einer Lichtquelle (22) gepulstes, monochromatisches Licht in diesen Lichtwellenleiter (7) einstrahlbar ist und mittels einer Signalverarbeitungsvorrichtung (23) eine Laufzeit des rückgestreuten Lichts erfassbar und auswertbar ist.

4. Einrichtung (1) nach einem der Ansprüche 1 bis 3,
**dadurch gekennzeichnet, dass** der Abstand (d) zumindest teilweise durch einen Abgasstutzen (31) gegeben ist, der zusätzlich auf den Abgaskanal (2) aufgesetzt ist.

5. Einrichtung (1) nach Anspruch 4,
**dadurch gekennzeichnet, dass** der Abgasstutzen (31) ein Bestandteil der Vorrichtung (10) zur Bestimmung des Abgasvolumens ist.

6. Einrichtung (1) nach einem der vorhergehenden Ansprüche, **dadurch gekennzeichnet, dass** der zumindest eine Lichtwellenleiter (7) in einem Hohlraum (9) eines steifen Trägerkörpers (8) angeordnet ist, dessen Form den Verlauf des Lichtwellenleiters (7) in dem Abgaskanal (2) festlegt, wobei der Trägerkörper (8) zugleich die Heizeinrichtung (8) oder Kühleinrichtung bildet.

7. Einrichtung (1) nach einem der vorhergehenden Ansprüche, **dadurch gekennzeichnet, dass** die Lichtwellenleiterstruktur (6) sich kreuzende Lichtwellenleiterabschnitte (7a) aufweist, durch die ein Lichtwellenleiternetz (17) ausgebildet ist, wobei das Lichtwellenleiternetz (17) Maschen (13) mit einer Maschenweite W aufweist, wobei für die Maschenweite vorzugsweise gilt: D*/3 > W > D*/10, wobei W die Maschenweite und D* der Durchmesser des Abgaskanals (2) oder Abgasstutzens (31) im Bereich des Lichtwellenleiternetzes (17) ist.

8. Einrichtung (1) nach einem der vorhergehenden Ansprüche, **dadurch gekennzeichnet, dass** die Lichtwellenleiterstruktur (6) und die Heizeinrichtung (8) oder Kühleinrichtung von einem Rahmen (14) eingefasst sind.

9. Einrichtung (1) nach Anspruch 8,
**dadurch gekennzeichnet, dass** der Rahmen (14) am Ende oder im Inneren des Abgaskanals (2) an dem Abgaskanal (2) befestigt ist.

10. Einrichtung (1) nach Anspruch 8,
**dadurch gekennzeichnet, dass** der Rahmen (14) von einer Halterung (16) im Inneren des Abgaskanals (2) gehalten ist, wobei die Halterung (16) an dem Ende des Abgaskanals (2) befestigt ist.

11. Einrichtung (1) nach Anspruch 8 oder 9,
**dadurch gekennzeichnet, dass** der Rahmen (14) über ein Scharnier (33) mit einem Befestigungselement (32) verbunden ist, das an dem Abgaskanal (2) befestigt ist.

12. Einrichtung (1) nach einem der vorhergehenden Ansprüche, **gekennzeichnet durch** eine Reinigungsvorrichtung (34) zur Reinigung einer äußeren Oberfläche der Lichtwellenleiterstruktur (6) und/oder der Heizeinrichtung (8) bzw. Kühleinrichtung.

13. Einrichtung (1) nach einem der der vorhergehenden Ansprüche,
**gekennzeichnet durch** zumindest eine Lichtquelle (22) zur Einstrahlung von Licht in die Lichtwellenleiterstruktur (6) und zumindest eine Signalverarbeitungseinrichtung (23), welche aus von Bragg-Gittern (5) in der Lichtwellenleiterstruktur (6) entgegen seiner ursprünglichen Ausbreitungsrichtung zurückgestreutem Licht eine Strömungsgeschwindigkeit des Abgases entlang des Verlaufes der Lichtwellenleiterstruktur (6)
bestimmt und daraus das **durch** den Abgaskanal (2) strömende Abgasvolumen ableitet.

14. Einrichtung (1) nach einem der der vorhergehenden Ansprüche, **dadurch gekennzeichnet, dass** die Heizeinrichtung(8) bzw. die Kühleinrichtung für eine Messung der Abgastemperatur deaktivierbar ist.

15. Einrichtung (1) nach einem der vorhergehenden Ansprüche, **gekennzeichnet durch** zumindest einen Sensor (30) zur Messung einer Konzentration eines Schadstoffes in dem Abgas und eine Auswerteinheit, die derart ausgebildet ist, dass sie anhand zumindest eines Messwerts für eine Konzentration eines Schadstoffes in dem Abgas und eines ermittelten Abgasvolumens eine Schadstoffemission der Anlage bestimmt.

16. Einrichtung (1) nach einem der vorhergehenden Ansprüche, **dadurch gekennzeichnet, dass** sie einen Abgaserzeuger (40) mit einer Steuer- und/oder Regelungseinrichtung (42) für diesen Abgaserzeuger (40) umfasst, wobei die Steuer- und/oder Regelungseinrichtung (42) derart ausgebildet ist, dass sie den Betrieb des Abgaserzeugers (40) in Abhängigkeit von einem ermittelten Abgasvolumen, einer ermittelten Abgastemperatur und/oder einer ermittelten Schadstoffemission steuert bzw. regelt.

## Claims

1. Device (1) generating exhaust gas, especially a boat, comprising an exhaust gas channel (2) from which exhaust gas leaves the device (1) into the surroundings (18) of the device, and a system (10) for determining an exhaust gas volume discharged through the exhaust gas channel (2) to the surroundings (18),
wherein for determining the exhaust gas volume, the system (10) comprises:
- a plurality of Bragg gratings (5) distributed in predetermined positions transversely to the flow direction (4) of the exhaust gas at the end of the exhaust gas channel (2) and
- an optical wave guide structure (6) in which the Bragg gratings (5) are embodied, wherein the optical wave guide structure (6) consists of at least one optical wave guide (7), **characterised by**
- a heating device (8) arranged adjacently to the Bragg gratings (5) and by which the Bragg gratings (5) are subjected to heat, wherein a thermal output to be emitted by the heating device (8) can be adjusted to the exhaust gas temperature, or a cooling device arranged adjacently to the Bragg gratings and by which the Bragg gratings (5) can be cooled to a temperature below an exhaust gas temperature, wherein
- the optical wave guide structure (6) and the heating device (8) or the cooling device are arranged in the interior of the exhaust gas channel (2) at the end of the exhaust gas channel (2) at a distance (d) from an outlet (12) of the exhaust gas into the surroundings (18) of the device (1), wherein the following applies of the distance (d): d > D/10, where d is the distance (d) from the outlet (12) and D is the diameter of the outlet (12).

2. Device (1) according to claim 1,
**characterised in that** the following applies for the distance (d): D > d.

3. Device (1) according to either of the preceding claims, **characterised in that** the Bragg gratings (5) along at least one optical wave guide (7) comprise different grating periods and spectral broadband light can be irradiated into these optical wave guides (7) by means of a light source (22), or **in that** the Bragg gratings (5) along at least one optical wave guide (7) have identical grating periods, it being possible to irradiate pulsed monochromatic light into these optical wave guides (7) by means of a light source (22) and a running time of the back-scattered light can be detected and evaluated by means of a signal processing device (23).

4. Device (1) according to any one of claims 1 to 3, **characterised in that** the distance (d) is at least partially given by an exhaust gas port (31) which is also placed on the exhaust gas channel (2).

5. Device (1) according to claim 4,
**characterised in that** the exhaust gas port (31) is a component of the system (10) for determining the exhaust gas volume.

6. Device (1) according to any one of the preceding claims, **characterised in that** the at least one optical wave guide (7) is arranged in a cavity (9) of a rigid support body (8) whose shape determines the course of the optical wave guide (7) in the exhaust gas channel (2), the support body (8) simultaneously forming the heating device (8) or cooling device.

7. Device (1) according to any one of the preceding claims **characterised in that** the optical wave guide structure (6) comprises intersecting optical wave guide sections (7a), which embody an optical wave guide net (17), the optical wave guide net (17) comprising meshes (13) with a mesh width W, wherein the following preferably applies for the mesh width: D*/3 > W > D*/10, where W is the mesh width and D* is the diameter of the exhaust gas channel (2) or exhaust gas port (31) in the region of the optical wave guide net (17).

8. Device (1) according to any one of the preceding claims, **characterised in that** the optical wave guide structure (6) and the heating device (8) or cooling device are surrounded by a frame (14).

9. Device (1) according to claim 8,
**characterised in that** the frame (14) is secured to the exhaust gas channel (2) at the end of or inside the exhaust gas channel (2).

10. Device (1) according to claim 8,
**characterised in that** the frame (14) is held in the interior of the exhaust gas channel (2) by a holding device (16), the holding device (16) being secured to the end of the exhaust gas channel (2).

11. Device (1) according to claim 8 or 9,
**characterised in that** the frame (14) is connected by a hinge (33) to a securing element (32) which is secured to the exhaust gas channel (2).

12. Device (1) according to any one of the preceding claims,
**characterised by** a cleaning system (34) for cleaning an outside surface of the optical wave guide structure (6) and/or the heating device (8) or cooling device.

13. Device (1) according to any one of the preceding claims, **characterised by** at least one light source (22) for irradiating light into the optical wave guide structure (6) and at least one signal processing device (23) which, from light scattered back from Bragg gratings (5) in the optical wave guide structure (7) counter to its original direction of propagation, determines a flow speed of the exhaust gas along the course of the optical wave guide structure (6) and from this derives the exhaust gas volume flowing through the exhaust gas channel (2).

14. Device (1) according to any one of the preceding claims, **characterised in that** the heating device (8) or the cooling device can be activated for a measurement of the exhaust gas temperature.

15. Device (1) according to any one of the preceding claims, **characterised by** at least one sensor (30) for measuring a concentration of a pollutant in the exhaust gas and an evaluation unit which is designed in such a way that it determines a pollutant emission of the plant using at least one measured value for a concentration of a pollutant in the exhaust gas and a determined exhaust gas volume.

16. Device (1) according to any one of the preceding claims, **characterised in that** it comprises an exhaust gas generator (40) having a controller and/or regulator (42) for this exhaust gas generator (40), the controller and/or regulator (42) being designed in such a way that it controls or regulates the operation of the exhaust gas generator (40) as a function of a determined exhaust gas volume, a determined exhaust gas temperature and/or a determined pollutant emission.

## Revendications

1. Installation (1) produisant des gaz d'échappement, notamment un bateau, ayant un canal (2) pour du gaz d'échappement, duquel du gaz d'échappement sort de l'installation (1) à l'entour (18) de l'installation (1) et comprenant un dispositif (10) de détermination d'un volume de gaz d'échappement cédé à l'entour (18) par le canal (2) pour du gaz d'échappement, le dispositif (10) de détermination du volume de gaz d'échappement comprenant
- plusieurs réseaux (5) de Bragg répartis transversalement à la direction (4) du courant du gaz d'échappement à l'extrémité du canal (2 ) pour du gaz d'échappement en des positions déterminées à l'avance et
- une structure (6) à fibre optique, dans laquelle les réseaux (5) de Bragg sont constitués, la structure (6) à fibre optique étant constituée d'au moins une fibre (7) optique,
**caractérisée par**
- un dispositif (8) de chauffage, qui est disposé au voisinage des réseaux (5) de Bragg et par lequel les réseaux (5) de Bragg peuvent être alimentés en chaleur, une puissance calorifique cédée par le dispositif (8) de chauffage pouvant être adaptée à la température du gaz d'échappement ou un dispositif de refroidissement, qui est monté au voisinage des réseaux (5) de Bragg et par lequel les réseaux (5) de Bragg peuvent être refroidis jusqu'à une température inférieure à une température du gaz d'échappement, dans laquelle
- la structure (6) à fibre optique et le dispositif (8) de chauffage ou le dispositif de refroidissement sont disposés à l'extrémité du canal (2) pour du gaz d'échappement à une distance (d) d'une sortie (12) du gaz d'échappement à l'entour (18) de l'installation (1) en ayant pour la distance (d) d > D/10, d étant la distance (d) de la sortie (12) et D étant le diamètre de la sortie (12).

2. Installation (1) suivant la revendication 1,
**caractérisée en ce que** l'on a pour la distance (d) : D > d.

3. Installation (1) suivant l'une des revendications précédentes,
**caractérisée en ce que** les réseaux (5) de Bragg ont, le long d'au moins une fibre (7) optique, des périodes de réseau différentes entre elles et de la lumière à large bande du point de vue du spectre peut être injectée dans cette fibre (7) optique au moyen d'une source (22) lumineuse ou **en ce que** les réseaux (5) de Bragg ont de mêmes périodes de réseau le long d'au moins une fibre (7) optique, de la lumière monochromatique pulsée peut être injectée au moyen d'une source (22) lumineuse dans cette fibre (7) optique et une durée de parcours de la lumière rediffusée peut être détectée et exploitée au moyen d'un dispositif (23) de traitement du signal.

4. Installation (1) suivant l'une des revendications 1 à 3, **caractérisée en ce que** la distance (d) est donnée, au moins en partie, par une tubulure (31) pour du gaz d'échappement, qui est mise supplémentairement sur le canal (2) pour du gaz d'échappement.

5. Installation (1) suivant la revendication 4,
**caractérisée en ce que** la tubulure (31) pour du gaz d'échappement fait partie du dispositif (10) de détermination du volume du gaz d'échappement.

6. Installation (1) suivant l'une des revendications précédentes,
**caractérisée en ce que** la au moins une fibre (7) optique est disposée dans une cavité (9) d'un corps (8) de support rigide, dont la forme fixe le tracé de la fibre (7) optique dans le canal (2) pour du gaz d'échappement, le corps (8) de support formant en même temps le dispositif (8) de chauffage ou le dispositif de refroidissement.

7. Installation (1) suivant l'une des revendications précédentes,
**caractérisée en ce que** la structure (6) à fibre optique a des tronçons (7a) de fibre optique, qui se croisent et par lesquels un réseau (17) de fibre optique est formé, le réseau (17) de fibre optique ayant des mailles (13) d'une ouverture W, en ayant pour l'ouverture des mailles, de préférence, D*/3 > W > D*/10, W étant l'ouverture de mailles et D* le diamètre du canal (2) pour du gaz d'échappement ou de la tubulure (31) pour du gaz d'échappement dans la région du réseau (17) de fibre optique.

8. Installation (1) suivant l'une des revendications précédentes,
**caractérisée en ce que** la structure (6) à fibre optique et le dispositif (8) de chauffage ou le dispositif de refroidissement sont encadrés par un cadre (14).

9. Installation (1) suivant la revendication 8,
**caractérisée en ce que** le cadre (14) est fixé au canal (2) pour du gaz d'échappement à l'extrémité ou à l'intérieur du canal (2) pour du gaz d'échappement.

10. Installation (1) suivant la revendication 8, **caractérisée en ce que** le cadre (14) est maintenu à l'intérieur du canal (2) pour du gaz d'échappement par une fixation (16), la fixation (16) étant fixée à l'extrémité du canal (2) pour du gaz d'échappement.

11. Installation (1) suivant la revendication 8 ou 9, **caractérisée en ce que** le cadre (14) est relié par une charnière (33) à un élément (32) de fixation, qui est fixé au canal (2) pour du gaz d'échappement.

12. Installation (1) suivant l'une des revendications précédentes,
**caractérisée par** un dispositif (34) de nettoyage pour le nettoyage d'une surface extérieure de la structure (6) à fibre optique et/ou du dispositif (8) de chauffage ou du dispositif de refroidissement.

13. Installation (1) suivant l'une des revendications précédentes,
**caractérisée par** au moins une source (22) lumineuse d'injection de lumière dans la structure (6) à fibre optique et par au moins un dispositif (23) de traitement du signal, qui détermine, à partir de la lumière rediffusée dans le sens contraire à son sens de propagation d'origine par les réseaux (5 ) de Bragg dans la structure (6) à fibre optique, une vitesse du courant du gaz d'échappement le long du tracé de la structure (6) à fibre optique et en déduit le volume du gaz d'échappement passant dans le canal (2) pour du gaz d'échappement.

14. Installation (1) suivant l'une des revendications précédentes,
**caractérisée en ce que** le dispositif (8) de chauffage ou le dispositif de refroidissement peut être désactivé pour une mesure de la température du gaz d'échappement.

15. Installation (1) suivant l'une des revendications précédentes,
**caractérisée par** au moins un capteur (30) de mesure d'une concentration d'une substance polluante dans le gaz d'échappement et par une unité d'exploitation, qui est constituée de manière à déterminer une émission de substance polluante de l'installation à l'aide d'au moins une valeur de mesure d'une concentration d'une substance polluante dans le gaz d'échappement et d'un volume de gaz d'échappement déterminé.

16. Installation (1) suivant l'une des revendications précédentes,
**caractérisée en ce qu'**elle comprend un producteur (40) de gaz d'échappement ayant un dispositif (42) de commande et/ou de régulation de ce producteur (40) de gaz d'échappement, le dispositif (42) de commande et/ou de régulation étant constitué de manière à commander ou à régler le fonctionnement du producteur (40) de gaz d'échappement en fonction de la détermination du volume de gaz d'échappement, de la détermination de la température du gaz d'échappement et/ou d'une détermination d'une émission de substance polluante.
